# EUROPÄISCHE PATENTSCHRIFT

(11) **EP 3 698 936 B1**
(45) Veröffentlichungstag und Bekanntmachung des Hinweises auf die Patenterteilung: **26.08.2026**
(21) Anmeldenummer: 20158604.7
(22) Anmeldetag: 20.02.2020
(51) Int. Cl.: B29C 45/00, B60R 13/00, B60R 13/08, B29C 53/04

(54) **VERFAHREN ZUR HERSTELLUNG VON BAUTEILEN MIT EINER BIEGESTELLE UND EIN SOLCHES BAUTEIL**
METHOD FOR MANUFACTURING COMPONENTS WITH A BENDING POINT AND SUCH A COMPONENT
PROCÉDÉ DE FABRICATION DE COMPOSANTS DOTÉS D'UN POINT DE PLIAGE ET COMPOSANT

(30) Priorität: 22.02.2019 DE 102019104607
(43) Veröffentlichungstag der Anmeldung: 26.08.2020
(73) Patentinhaber: VOLKSWAGEN AG, 38440 Wolfsburg (DE)
(72) Erfinder: Vella, Salvatore, 38440 Wolfsburg (DE); Mende, Oliver, 38440 Wolfsburg (DE)
(74) Vertreter: RGTH

(56) Entgegenhaltungen:
- DE-A1- 102009 057 939
- DE-B4- 102006 054 172
- BASF: "DImensionierung von Filmscharnieren", 30 May 2014 (2014-05-30), XP055712902, Retrieved from the Internet <URL:https://docplayer.org/33495431-Dimensionierung-von-filmscharnieren-technische-information.html> [retrieved on 20200708]

## Beschreibung

Die Erfindung betrifft ein Verfahren zur Herstellung von Bauteilen, insbesondere Radhausschalen von Kraftfahrzeugen, bei dem das Bauteil in einer gespreizten oder aufgeklappten Form gefertigt wird und zu einem späteren Zeitpunkt in eine gekrümmte oder eingeklappte Form geklappt wird, wobei in einem Bereich einer Biegestelle eine Materialstärke des Bauteils im Vergleich zu einer Materialstärke eines angrenzenden Bereichs abnimmt. Weiterhin betrifft die Erfindung ein mit einem Verfahren hergestelltes Bauteil.

### Stand der Technik

Solche Verfahren sind bereits aus der Fertigungstechnik bekannt, beispielsweise werden Bauteile aus Kunststoff im Spritzguss- oder Spritzpressverfahren hergestellt. Haben die Bauteile jedoch starke Krümmungen oder eine Omega-Form, sind dabei häufig mehrere Teile nötig, da der eingespritzte Kunststoff Werkzeugformen mit starken Krümmungen nicht ausreichend ausfüllen kann. Die Handhabung mehrerer Teile führt zu einer aufwendigeren Montage und benötigt mehr Platz an der Verarbeitungslinie in der Montagehalle sowie mehrere Teilenummern für die Verwaltung. Die Herstellung von mehrteiligen Systemen führt also zu einem erheblichen Logistikaufwand, welcher mit Kosten verbunden ist. Zudem müssen häufig teure Schieber an den Verbindungen der mehreren Bauteile angebracht werden, um diese zu einem gekrümmten Bauteil zusammenzufügen.

Auch Verfahren zur Herstellung von einteiligen Bauteilen mit Krümmungen sind bekannt. Die einteiligen, gekrümmten Bauteile sind jedoch häufig nicht stapelbar, oder nicht effizient stapelbar, da zwischen der Außenseite des einen Bauteils und der Innenseite des nächsten Bauteils viel Raum ungenutzt bleibt und durch eine verringerte Packungsdichte und/oder mehr oder größere Transportboxen der Transport stark verteuert wird.

Alternativ kann die Packungsdichte von Bauteilen mit Krümmungen durch das Einbauen eines klassischen Filmscharniers in das Bauteil gelöst werden, da an dem Filmscharnier das Bauteil aufgeklappt werden kann und somit eine bessere Stapelung für den Transport möglich ist. Außerdem ermöglicht das Filmscharnier die Herstellung des Bauteils an einem Stück in einer Werkzeugform. Hierbei ist jedoch, gerade bei Spritzgussverfahren, häufig das Problem, dass am Filmscharnier ein Engpass entsteht und der Kunststoff nicht mehr optimal in den dahinterliegenden Hohlraum gepresst werden kann. Eine solche Engstelle sollte deshalb bei Spritzgussverfahren durch eine bessere Bauteilkonstruktion vermieden werden. Zudem hat das klassische Filmscharnier kein optimales Knickverhalten, da das Material an der Knickstelle sehr dünn ausgebildet ist. Häufig kommt es dabei zu einer Materialschwächung, zu Rissen oder zu Weißbruch an der Knickstelle, was auch zum Durchbruch des Materials und zur Trennung der einzelnen Teile des gekrümmten Bauteils führen kann.

Aus der DE 10 2006 054 172 B4 ist ein Verfahren zur Herstellung von gewölbten, selbsttragenden Bauteilen, bei dem plattenartige ein- oder mehrschichtige Halbzeuge insbesondere in Verformungswerkzeugen verformt und in Formen des gewölbten endgültigen Bauteils gebracht werden und die vorgeformten Einzelelemente erst am Installationsort in die endgültige gewölbte Bauteilform gebracht werden, bekannt, wobei hierbei die Halbzeuge in zusammenhängende Einzelelemente vorgeformt werden. Die Bauteile der Patentschrift bestehen dabei aus mehreren Schichten, wobei an der Verbindungsstelle der zusammenhängenden Einzelelemente die Kernschicht stark verdünnt oder ausgespart ist.

Die DE 10 2009 057 939 A1 offenbart eine Unterbodenverkleidung für ein Kraftfahrzeug umfassend zwei Bereiche, die für unterschiedliche Anforderungen an den Unterbodenschutz ausgelegt sind. Basf: "Dimensionierung von Filmscharnieren", 30. Mai 2014 (2014-05-30), XP055712902, befasst sich mit der Dimensionierung von Filmscharnieren.

### Darstellung der Erfindung: Aufgabe, Lösung, Vorteile

Der vorliegenden Erfindung liegt die Aufgabe zugrunde, ein Bauteil, insbesondere ein gekrümmtes oder teilweise gekrümmtes Bauteil, derart herzustellen, dass in einem Bereich der Biegestelle das Bauteil in seine endgültige Form geklappt oder gekrümmt werden kann, ohne dabei jedoch das Material an der Biegestelle zu schwächen oder gar Risse beziehungsweise Weißbruch zu verursachen. Zudem sollen Engstellen am gekrümmten Bauteil vermieden werden, damit dieses beispielsweise auch im herkömmlichen Spritzgussverfahren ohne Einschränkungen hergestellt werden kann.

Zur Lösung dieser Aufgabe sieht die vorliegende Erfindung ein Verfahren zur Herstellung von Bauteilen, insbesondere gekrümmten oder teilweise gekrümmten Bauteilen, speziell Radhausschalen von Kraftfahrzeugen, vor, bei denen das Bauteil in einer gespreizten oder aufgeklappten Form gefertigt wird und zu einem späteren Zeitpunkt in eine gekrümmte oder eingeklappte Form geklappt oder gekrümmt wird. Das Bauteil wird so geformt, dass in einem Bereich einer Biegestelle eine Materialstärke des gekrümmten Bauteils im Vergleich zu einer Materialstärke eines angrenzenden Bereichs abnimmt. Dabei wird die Materialstärke im Bereich der Biegestelle um 40% bis 60%, bevorzugt um 45% bis 55%, insbesondere um etwa 50%, der Materialstärke des angrenzenden Bereichs geringer ausgeformt. Dabei wird die Breite des Bereichs der Biegestelle über die doppelte bis dreißigfache, bevorzugt die fünffache bis zwanzigfache, besonders bevorzugt die zehnfache bis zwölffache, Dicke der Materialstärke des angrenzenden Bereichs ausgeformt, wobei in dem Bereich der Biegestelle ein Bereich konstanter Materialstärke ausgeformt wird, und wobei der Bereich konstanter Materialstärke mit minimaler Materialstärke ausgeformt wird.

Ein gekrümmtes oder gewölbtes Bauteil ist dabei ein Bauteil, welches in ein oder mehrere Richtungen eine Krümmung oder Wölbung aufweist, wobei, für den Fall von mehreren Krümmungen oder Wölbungen, diese vorzugsweise zueinander hin gebogen sind, also das gleiche Vorzeichen haben. Dabei können die Krümmungen oder Wölbungen unterschiedliche Krümmungsradien oder Wölbungsradien aufweisen.

Die gespreizte oder aufgeklappte Form ist die Form, in welcher das Bauteil gefertigt wird, also die Werkzeuglage in Form des Hohlraums der Werkzeugform. In der gespreizten oder ausgeklappten Form ist das Bauteil gestreckt, wobei die Krümmungsrichtung im Bereich der Biegestelle bevorzugt invertiert ist, also der Mittelpunkt des Kreises des Krümmungsradius auf der anderen Seite des Bauteils liegt, als im gekrümmten Zustand. Das Bauteil kann dabei von beliebiger Form sein und abgesehen vom Bereich der Biegestelle beispielsweise aus gekrümmten oder gewölbten oder aus mindestens zwei linearen Abschnitten ausgebildet sein.

Hierbei bezeichnet der Bereich der Biegestelle diejenige Stelle des Bauteils, an welcher die Krümmung beim Zusammenklappen in die Form des gekrümmten Zustandes geändert wird, wobei im Bereich der Biegestelle die Materialstärke abnimmt und wieder zunimmt. Der Bereich der Biegestelle ist dabei der gesamte Bereich der Ab- und Zunahme der Materialstärke in Längsrichtung der Biegestelle, ausgehend von der Materialstärke des angrenzenden Bereichs auf der einen Seite, bis zu der Stelle, an der die Materialstärke des angrenzenden Bereichs auf der anderen Seite wieder erreicht ist.

Die gekrümmte oder geklappte Form bezeichnet die Form des Bauteils nach dem Einklappen oder Krümmen an der Biegestelle. Dies ist dabei vorzugsweise die endgültige Form des Bauteils beziehungsweise die Form des Bauteils, welche ursprünglich konstruiert wurde, und die Form, in der das Bauteil weiter verarbeitet beziehungsweise montiert wird, also die Einbaulage. Bei dem erfindungsgemäßen Verfahren wird also im Formwerkzeug nicht die endgültige Form des Bauteils hergestellt, da diese erst zu einem späteren Zeitpunkt durch das Klappen oder Krümmen des Bauteils erreicht wird.

Das Klappen oder Einklappen oder Krümmen zu einem späteren Zeitpunkt bedeutet dabei, dass die Formänderung des Bauteils nicht bei oder direkt nach der Herstellung des Bauteils in gespreizter, aufgeklappter oder gestreckter Form geschieht, sondern dazwischen ein oder mehrere Verfahrensschritte stattfinden können, beispielsweise Lagerung, Verpacken oder Transport des Bauteils in gespreizter, aufgeklappter oder gestreckter Form. Dadurch ist üblicherweise der Herstellungsort nicht der Ort, an dem das Bauteil geklappt oder gekrümmt wird.

Die an den Bereich der Biegestelle angrenzenden Bereiche werden auch als angrenzende Bereiche bezeichnet. Dabei sind jene Bereiche des Bauteils gemeint, mit welchen die Biegestelle direkt verbunden ist, welche jedoch außerhalb des Bereichs ab- und zunehmender Materialstärke liegen. Dabei ist die Materialstärke der angrenzenden Bereiche überall größer als die Materialstärke im Bereich der Biegestelle. In weiter entfernt liegenden Bereichen kann die Materialstärke jedoch wieder ab- und/oder zunehmen.

Die Materialstärke bezeichnet dabei die Dicke beziehungsweise die Höhe des Materials (im Schnitt) an der jeweiligen Stelle. Erfindungsgemäß ist dabei die minimale Materialstärke im Bereich der Biegestelle um 40% bis 60%, bevorzugt um 45% bis 55%, besonders bevorzugt um etwa 50%, der Materialstärke des angrenzenden Bereichs geringer ausgeformt. Verglichen wird hierbei die minimale Materialstärke im Bereich der Biegestelle, also der Bereich der Biegestelle, an welchem die dünnste Materialstärke erreicht wird, mit der maximalen Materialstärke in den angrenzenden Bereichen. Nach den Bereichen der angrenzenden Bereiche kann die Materialstärke, beispielsweise in weiteren Bereichen des Bauteils, einen unterschiedlichen Wert annehmen, also wieder abfallen oder ansteigen. Vorzugsweise nimmt sogar die maximale Materialstärke nach den angrenzenden Bereichen wieder etwas ab, da die angrenzenden Bereiche mit einer verstärkten Materialstärke gefertigt werden.

Die Abnahme der Materialstärke von den angrenzenden Bereichen bis zur minimalen Materialstärke im Bereich der Biegestelle erfolgt kontinuierlich, also ohne abrupte Materialstärkenänderungen oder Stufen in der Materialstärke. Dabei wird die Krümmung der Ober- und Unterseite des Bauteils im Bereich der Biegestelle mit einem ähnlichen Krümmungsradius ausgeformt, das heißt, dass auch im Bereich der Biegestelle Ober- und Unterseite des Bauteils nahezu parallel verlaufen. Dies verhindert eine Diskontinuität in der Materialstärke und demnach einen stetigen beziehungsweise langsamen Materialstärkenübergang im Bereich der Biegestelle bis hin zur minimalen Materialstärke.

Dieser langsame Materialstärkenübergang von einer dickeren Materialstärke in den angrenzenden Bereichen bis auf eine Materialstärke im Bereich von 40% bis 60%, bevorzugt von 45% bis 55%, besonders bevorzugt von etwa 50%, der Materialstärke in den angrenzenden Bereichen hat mehrere Vorteile. Durch einen breiteren Bereich der Biegestelle kann sich die Spannung während des Krümmens oder Klappens besser verteilen, weswegen beim Klappen oder Krümmen des Bauteiles eine harmonischere Spannungsverteilung und somit weniger Risiko für Brüche oder Risse entsteht. Dies verhindert ebenso den bei Kunststoff häufig zu beobachtenden Weißbruch. Zudem entstehen beim Einspritzen des Kunststoffs in das Formwerkzeug beim erfindungsgemäßen Verfahren im Gegensatz zu klassischen Spritzgussverfahren mit sehr dünnen Filmscharnieren keine Engpässe im Formwerkzeug. Dadurch kann der Kunststoff gleichmäßiger in das Formwerkzeug einfließen oder einströmen und es besteht weniger Gefahr einer Verstopfung, beispielsweise am Engpass. Dies verbessert zusätzlich das Fließverhalten des Kunststoffs beim Spritzgussverfahren. Da ein stabiles Scharnier gleich mit gefertigt wird, müssen auch keine teuren Schieber verwendet werden, was sowohl die Montagezeiten verringert als auch die Kosten des Gesamtbauteils senkt.

Erfindungsgemäß wird mit dem vorliegenden Verfahren die Breite des Bereichs der Biegestelle über die doppelte bis dreißigfache, bevorzugt die fünffache bis zwanzigfache, besonders bevorzugt die zehnfache bis zwölffache, Dicke der Materialstärke des angrenzenden Bereiches ausgeformt. Dabei kann sich der Bereich der Biegestelle über die angrenzende Fläche erheben, oder mit ihr auf einer Ebene sein, also eine flache Biegestelle bilden. Die Dicke der Materialstärke beziehungsweise die Stärke des Materials ist der Abstand des Bauteils von seiner Oberseite zu seiner Unterseite, und somit die Höhe des Formwerkzeuges, mit welchem das Bauteil gefertigt wird. Die große Breite des Bereichs der Biegestelle verbessert die Spannungsverteilung beim Klappen oder Krümmen des Bauteils und führt so zu einem wesentlich stabileren Bauteil. Sie ist damit ein wichtiger Faktor in der Verringerung von Rissen und Weißbruch.

Erfindungsgemäß wird mit dem vorliegenden Verfahren in dem Bereich der Biegestelle ein Bereich konstanter Materialstärke ausgeformt. Der Bereich konstanter Materialstärke ist ein Bereich, in dem sich die Materialstärke nicht ändert, sondern gleichbleibend auf dem Niveau der minimalen Materialstärke ist. Dieser Bereich mit konstanter Materialstärke ist vorzugsweise doppelt so lang bis halb so lang wie die Materialstärke des Bereichs der Biegestelle. Besonders bevorzugt hat der Bereich konstanter Materialstärke die gleiche Breite wie die Dicke der Materialstärke des Bereichs der Biegestelle.

Erfindungsgemäß wird beim Herstellen des gekrümmten Bauteils der Bereich konstanter Materialstärke mit der minimalen Materialstärke ausgeformt. Die minimale Materialstärke ist die geringste Materialstärke im Bereich der Biegestelle, also der Bereich, in dem die Materialstärke um 40% bis 60%, bevorzugt um 45% bis 55%, besonders bevorzugt um etwa 50%, der Materialstärke des angrenzenden Bereichs abgenommen hat. Besonders bevorzugt wird der Bereich mit minimaler Materialstärke in der Mitte des Bereichs der Biegestelle ausgeformt. Vorzugsweise wird der Bereich der Biegestelle symmetrisch, besonders bevorzugt achssymmetrisch ausgeformt, wobei der Bereich minimaler Materialstärke dabei auf der Symmetrieachse liegt, also die Symmetrieachse durch die Mitte des Bereichs minimaler Materialstärke verläuft.

Vorzugsweise bleibt das Bauteil beim Klappen oder Krümmen in die gekrümmte oder eingeklappte Form in mindestens eine Richtung geöffnet. Das Bauteil ist also nicht in alle Richtungen geschlossen, vorzugsweise in mindestens zwei Richtungen geöffnet. Das heißt, auch in gekrümmter oder eingeklappter Form bildet das Bauteil bevorzugt keine geschlossene Form, sondern ist geöffnet.

Bevorzugterweise bleibt dabei das Bauteil beim Krümmen oder Klappen in die gekrümmte oder eingeklappte Form in der der Biegestelle gegenüberliegenden Richtung geöffnet. Vorzugsweise hat das Bauteil dabei jedoch noch weitere Öffnungen, welche nicht der Biegestelle gegenüberliegen. Dies schließt nicht aus, dass das Bauteil auch auf Seite der Biegestelle eine Öffnung enthält.

In einem bevorzugten Verfahrensschritt entsteht beim Klappen oder Krümmen des Bauteils in die gekrümmte oder eingeklappte Form eine Öffnungsbreite, welche kürzer ist als eine größte Innenbreite des Bauteils parallel zur Öffnung. Unter der Öffnungsbreite versteht man dabei den in der Ebene der Öffnung liegenden Abstand einander gegenüberliegender Seiten des Bauteils. Beispielsweise wird am Ende des Bauteils, also dort, wo die Öffnung beginnt, von einer Kante zur gegenüberliegenden Kante der Abstand gemessen. Die größte Innenbreite wird dabei parallel zur Öffnungsbreite des Bauteils bestimmt, jedoch nicht in der Ebene der Öffnung, sondern auf Höhe der maximalen Ausdehnung, vorzugsweise der maximalen inneren Ausdehnung des Bauteils. Bei kreisförmigen oder elliptischen Bauteilen würde diese größte Innenbreite beispielsweise dem Durchmesser beziehungsweise der doppelten großen Halbachse entsprechen. Entscheidend dabei ist, dass die Öffnungsbreite und die größte Innenbreite parallel zueinander im Bauteil liegen, um vergleichbar zu sein.

Vorzugsweise wird beim Klappen oder Krümmen des Bauteils in die gekrümmte oder eingeklappte Form das Bauteil so geklappt oder gekrümmt, dass ein Hinterschnitt, bevorzugterweise von mindestens 7°, auf einer Seite des Bauteils entsteht, besonders bevorzugt entsteht dabei jeweils ein Hinterschnitt, bevorzugterweise von mindestens 7°, auf nun einander gegenüberliegenden Seiten des Bauteils. Ein Hinterschnitt ist dabei ein Bereich des Bauteils, welcher ausgehend von der Kante der größten Innenbreite, also der Linie der Ebene der größten Innenbreite, mit einer Krümmung wieder zur entgegengesetzten Seite hin geneigt ist, also die Breite der Ebenen parallel zur Ebene der größten Innenbreite mit größerem Abstand zu dieser hin verkleinert. Das heißt, nach der Ebene der größten Innenbreite krümmt sich das Bauteil, vorzugsweise mit der vorher vorhandenen Krümmung oder Wölbung, wobei der Abstand zwischen gegenüberliegenden Seiten im Bereich des Hinterschnitts abnimmt. Der Hinterschnitt, welcher aus der Ebene der größten Innenbreite ausgehend bis zur Öffnung führt, ist dabei vorzugsweise gekrümmt oder gerade und zur gegenüberliegenden Seite des Bauteils geneigt, sodass die Öffnungsbreite kürzer ist als die größte Innenbreite. Das Bauteil verjüngt sich demnach von der Ebene der Innenbreite ausgehend in Richtung Öffnung wieder und hat dabei vorzugsweise, bei Betrachtung der gesamten gekrümmten oder eingeklappten Form, eine Omega-Form.

Betrachtet man nun einen Schnitt durch das mit einem bevorzugten Verfahrensschritt hergestellte Bauteil, welcher sowohl die Ausdehnung der größten Innenbreite enthält, als auch senkrecht zur Ebene der Innenbreite und der Ebene der Öffnung steht, so kann man den Winkel des Hinterschnitts bestimmen. Zieht man dabei in der Schnittebene auf einer Seite des Bauteils eine Gerade durch den Endpunkt des Bauteils, also die Kante an der Öffnung des Bauteils beziehungsweise deren Schnittpunkt mit der Schnittebene, und führt die Gerade zum Endpunkt der größten Innenbreite fort, also den Punkt an der Innenwand des Bauteils, welcher Teil der größten Innenbreite ist und dem zuvor bestimmten Ende der Öffnung am nächsten liegt, so bekommt man einen Schenkel des Winkels. Der Winkel selbst wird dabei von der eben beschriebenen Gerade und der Tangente an den Endpunkt der Innenbreite auf der Innenwand des Bauteils gebildet. Der Scheitelpunkt des Winkels liegt demnach auf dem Endpunkt der Innenbreite, also dem Punkt an der Innenwand des Bauteils, von welchem ab die größte Innenbreite gemessen werden kann. Dieser eben beschriebene Winkel ist dabei bevorzugterweise mindestens 7°, vorzugsweise jedoch größer.

Vorzugsweise wird die gespreizte oder aufgeklappte Form des Bauteils im Spritzgussverfahren hergestellt. Im Spritzgussverfahren wird dabei mit einem geeigneten Thermoplast beziehungsweise einem geeigneten thermoplastischen Granulat das Formwerkzeug gefüllt. Das Bauteil ist demnach bevorzugterweise aus Kunststoff, besonders bevorzugt aus thermoplastischen Kunststoff geformt. Beim Spritzgussverfahren ergibt sich speziell durch die dickere minimale Materialstärke des nach dem vorzugsweisen Verfahren hergestellten Bauteils ein großer Vorteil bei dem Einspritzen des Thermoplasts, da dieses deutlich weniger verklumpt beziehungsweise im Formwerkzeug kein Engpass wie bei einem klassischen Filmscharnier entsteht.

Bei einem bevorzugten Verfahren wird das Bauteil aus nur einem Material und/oder mit einer einzigen Schicht ausgeformt. Im Gegensatz zu mehrschichtigen Formen oder der Verwendung mehrerer Materialien ist somit eine deutlich einfachere Handhabung des Bauteils möglich und eine einfachere Herstellung. Dabei muss das Material selbst nicht homogen sein, es wird aber nicht aus mehreren Schichten gebildet, und/oder es wird kein Film oben oder unten auf das Material aufgetragen. Ebenso ist eine Verstärkungsschicht oder Füllerschicht in der Mitte des Bauteils nicht vorgesehen.

Bevorzugterweise wird das Bauteil nach der Herstellung in gespreizter oder aufgeklappter Form verpackt und transportiert, und das Biegen, Krümmen oder Klappen des Bauteils in die gekrümmte oder eingeklappte Form wird erst nachträglich oder danach durchgeführt. Zwischen der Herstellung und dem Biegen, Krümmen oder Klappen des Bauteils können dabei mehrere Schritte liegen, beispielsweise das Transportieren, das Verpacken, das Lagern oder das Stapeln des Bauteils. Dabei kann das Bauteil in gespreizter oder aufgeklappter Form sehr effizient verpackt werden, und hat trotzdem durch die große Materialstärkendicke im Bereich der Biegestelle eine hohe Stabilität und eine geringe Wahrscheinlichkeit, im Bereich der Biegestelle Schaden zu nehmen.

Ebenso ist ein verfahrensmäßig ausgebildetes Bauteil, insbesondere ein gekrümmtes, gewölbtes oder teilweise gekrümmtes Bauteil, speziell eine Radhausschale von Kraftfahrzeugen Gegenstand der Erfindung. Das Bauteil weist dabei eine Biegestelle auf und hat in einem Bereich der Biegestelle eine Materialstärke des Bauteils, welche im Vergleich zu einer Materialstärke eines angrenzenden Bereichs geringer ausgebildet ist. Die minimale Materialstärke im Bereich der Biegestelle ist dabei erfindungsgemäß um 40% bis 60%, bevorzugter Weise um 45% bis 55%, insbesondere um etwa 50%, geringer, als die Materialstärke des angrenzenden Bereichs. Erfindungsgemäß ist die Breite des Bereichs der Biegestelle über die doppelte bis dreißigfache, bevorzugt die fünffache bis zwanzigfache, besonders bevorzugt die zehnfache bis zwölffache, Dicke der Materialstärke des angrenzenden Bereiches ausgeformt. In dem Bereich der Biegestelle ist ein Bereich konstanter Materialstärke ausgeformt, wobei der Bereich konstanter Materialstärke mit minimaler Materialstärke ausgeformt ist.

Erfindungsgemäss weist das Bauteil einen Bereich konstanter Materialstärke auf, welcher bevorzugt mittig im Bereich der Biegestelle angeordnet ist. Dabei ist die Materialstärke im Bereich konstanter Materialstärke die minimale Materialstärke.

In einer bevorzugten Ausführungsform weist das Bauteil in gekrümmter oder eingeklappter Form in mindestens einer Richtung, bevorzugt in der der Biegestelle gegenüberliegenden Seite, eine Öffnung auf. Vorzugsweise weist das Bauteil in gekrümmter oder eingeklappter Form außerdem einen Hinterschnitt, bevorzugt von mindestens 7°, auf.

### Beschreibung der Zeichnungen

Im Folgenden werden bevorzugte Ausführungsbeispiele eines anhand des vorliegenden Verfahrens hergestellten Bauteils anhand der Zeichnungen näher erläutert. Es zeigen in rein schematischer Darstellung:
- Figur 1: ein Bauteil in gespreizter oder aufgeklappter und gekrümmter oder eingeklappter Form,
- Figur 2: eine Schnittdarstellung durch das Bauteil gemäß Schnittlinie A-A beziehungsweise A1-A1,
- Figur 3: eine Schnittdarstellung durch das Bauteil in gekrümmter oder eingeklappter Form.

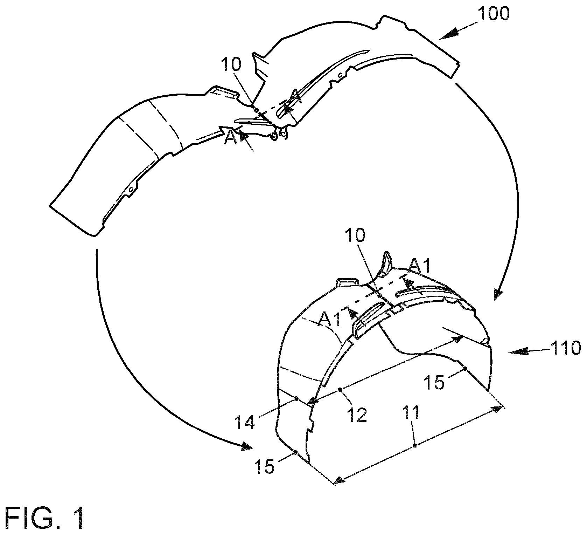

In Figur 1 wird schematisch ein Bauteil in gespreizter oder ausgeklappter Form 100 und ein Bauteil in gekrümmter oder eingeklappter Form 110 gezeigt. Die Biegestelle 10 des Bauteils liegt dabei auf halber Länge, in der Mitte des Bauteils. In gekrümmter oder eingeklappter Form 110 führt die Öffnungsbreite 11 von einer Kante der Öffnung 15 zur gegenüberliegenden Kante der Öffnung 15. Die größte Innenbreite 12 des Bauteils in gekrümmter oder eingeklappter Form 110 verbindet die beiden Innenkanten der größten Innenbreite 14 an der Stelle des größten Durchmessers des Bauteils in gekrümmter oder eingeklappter Form 110. Die Pfeile der Grafik zeigen das Klappen oder Krümmen des Bauteils von seiner gespreizten oder aufgeklappten Form 100 in seine gekrümmte oder eingeklappte Form 110. In der gekrümmten oder eingeklappten Form liegt die Öffnung der Öffnungsbreite 11 auf der gegenüberliegenden Seite der Biegestelle 10.

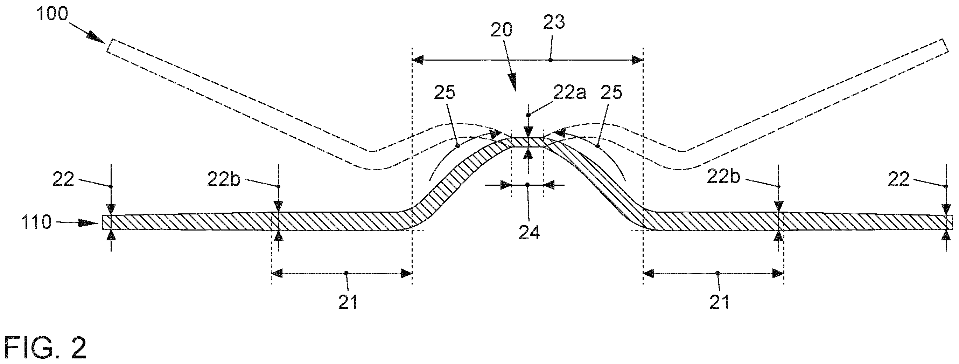

Figur 2 zeigt einen Schnitt gemäß der Schnittlinie A-A des Bauteils in gespreizter oder aufgeklappter Form 100 beziehungsweise der Schnittlinie A1-A1 des Bauteils in gekrümmter oder eingeklappter Form 110 aus Figur 1. In der Mitte des achssymmetrischen Schnitts befindet sich der Bereich einer Biegestelle 20, jeweils rechts und links davon der angrenzende Bereich 21. Das Bauteil hat eine Materialstärke 22, die sich über den Schnittverlauf ändert. Die minimale Materialstärke 22a befindet sich in der Mitte des Bereichs einer Biegestelle 20 in Längsrichtung der Biegestelle, wobei am Ort der minimalen Materialstärke 22a ein Bereich konstanter Materialstärke 24 existiert, in welchem sich die Materialstärke 22 nicht ändert. Die Materialstärke des angrenzenden Bereichs 22b ist dicker als die minimale Materialstärke 22a im Zentrum des Bereichs einer Biegestelle. Der Materialstärkenübergang von der Materialstärke des angrenzenden Bereichs 22b zur minimalen Materialstärke 22a verläuft kontinuierlich. Der Bereich einer Biegestelle hat dabei auf seiner Oberseite und seiner Unterseite im Bauteil in gekrümmter oder eingeklappter Form 110 einen ähnlichen Krümmungsradius 25. Ober- und Unterseite des Bereichs einer Biegestelle 20 sind demnach ähnlich stark gekrümmt, wobei der Krümmungsradius 25 über den Bereich einer Biegestelle konstant ist. Der Bereich konstanter Materialstärke 24 befindet sich im Zentrum des Bereichs einer Biegestelle 20 an der Stelle der minimalen Materialstärke 22a. Dabei ist der Bereich konstanter Materialstärke 24 halb so breit wie die minimale Materialstärke 22a dick ist. Der doppelte Krümmungsradius 25 ist 10fach so groß wie die Materialstärke des angrenzenden Bereichs 22b. Die minimale Materialstärke 22a ist dabei halb so groß wie die Materialstärke des angrenzenden Bereichs 22b. Nach dem angrenzenden Bereich 21 kann die Materialstärke 22 dann auch wieder abnehmen oder zunehmen, je nachdem, was für das gekrümmte Bauteil erforderlich ist.

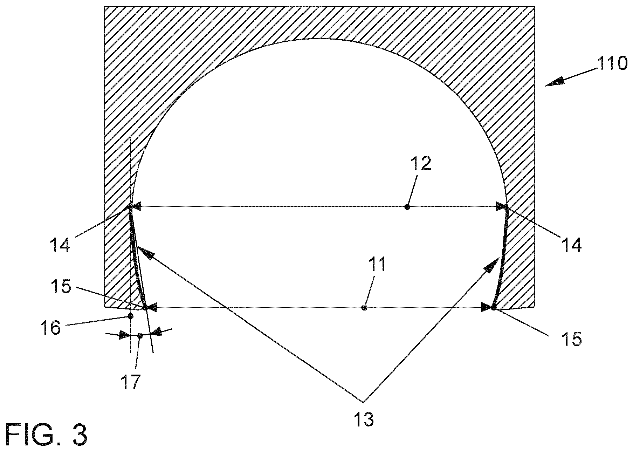

In Figur 3 wird ein Schnitt durch das Bauteil in gekrümmter oder eingeklappter Form gezeigt. Dabei führt die Länge der größten Innenbreite 12 von einer Innenkante der größten Innenbreite 14 zur gegenüberliegenden Seite der Innenkante der größten Innenbreite 14. Die Öffnungsbreite 11 verbindet die beiden Kanten der Öffnung 15 auf gegenüberliegenden Seiten. Zwischen der Innenkante der größten Innenbreite 14 und der Kante der Öffnung 15 verringert sich die Distanz der beiden Seiten des Bauteils, wodurch die Öffnungsbreite 11 kürzer ist als die größte Innenbreite 12. In diesem Bereich entsteht demnach ein sogenannter Hinterschnitt. Dabei bildet die Gerade durch die Innenkante der größten Innenbreite 14 und die Kante der Öffnung 15 auf der jeweiligen Seite einen Winkel von mindestens 7° mit der Tangente an der Innenkante der größten Innenbreite aus. Dieser Winkel ist der Winkel des Hinterschnitts 17.

### Bezugszeichenliste

- 100: Bauteil in gespreizter oder aufgeklappter Form
- 110: Bauteil in gekrümmter oder eingeklappter Form

- 10: Biegestelle
- 11: Öffnungsbreite
- 12: größte Innenbreite
- 13: Hinterschnitt
- 14: Innenkante der größten Innenbreite
- 15: Kante der Öffnung
- 16: Tangente an der Innenkante der größten Innenbreite
- 17: Winkel des Hinterschnitts

- 20: Bereich einer Biegestelle
- 21: angrenzender Bereich
- 22: Materialstärke
- 22a: minimale Materialstärke
- 22b: Materialstärke des angrenzenden Bereichs
- 23: Breite des Bereichs der Biegestelle
- 24: Bereich konstanter Materialstärke
- 25: Krümmungsradius des Bereichs der Biegestelle

## Patentansprüche

1. Verfahren zur Herstellung von Bauteilen, insbesondere gekrümmten oder teilweise gekrümmten Bauteilen, speziell von Radhausschalen von Kraftfahrzeugen, bei dem das Bauteil in einer gespreizten oder ausgeklappten Form (100) gefertigt wird und zu einem späteren Zeitpunkt in eine gekrümmte oder eingeklappte Form (110) gebracht wird, wobei das Bauteil eine Biegestelle (10) aufweist und in einem Bereich der Biegestelle (20) eine Materialstärke (22) des Bauteils im Vergleich zu einer Materialstärke eines angrenzenden Bereichs (22b) abnehmend oder geringer gestaltet wird,
**dadurch gekennzeichnet,**
**dass** die minimale Materialstärke (22a) im Bereich der Biegestelle (20) um 40% bis 60%, bevorzugter Weise um 45% bis 55%, insbesondere um etwa 50%, der Materialstärke des angrenzenden Bereichs (22b) geringer ausgeformt wird, wobei die Breite des Bereichs der Biegestelle (20) über die doppelte bis dreißigfache, bevorzugt die fünffache bis zwanzigfache, besonders bevorzugt die zehnfache bis zwölffache, Dicke der Materialstärke des angrenzenden Bereichs (22b) ausgeformt wird, wobei in dem Bereich der Biegestelle (20) ein Bereich konstanter Materialstärke ausgeformt wird, und wobei der Bereich konstanter Materialstärke mit minimaler Materialstärke (22a) ausgeformt wird.

2. Verfahren nach Anspruch 1,
**dadurch gekennzeichnet,**
**dass** das Bauteil beim Krümmen oder Einklappen in die gekrümmte oder eingeklappte Form (110) in mindestens eine Richtung geöffnet ausgeformt wird.

3. Verfahren nach Anspruch 2,
**dadurch gekennzeichnet,**
**dass** das Bauteil beim Krümmen oder Einklappen in die gekrümmte oder eingeklappte Form (110) in der der Biegestelle (10) gegenüberliegenden Richtung geöffnet bleibt.

4. Verfahren nach Anspruch 2 oder 3,
**dadurch gekennzeichnet,**
**dass** beim Krümmen oder Einklappen des Bauteils in die gekrümmte oder eingeklappte Form (110) eine Öffnungsbreite (11) entsteht, welche kürzer ist als eine größte Innenbreite (12) des Bauteils parallel zur Öffnung.

5. Verfahren nach Anspruch 4,
**dadurch gekennzeichnet,**
**dass** beim Krümmen oder Einklappen des Bauteils in die gekrümmte oder eingeklappte Form (110) das Bauteil nun einen Hinterschnitt (13) von mindestens 7° aufweist.

6. Verfahren nach einem der vorhergehenden Ansprüche,
**dadurch gekennzeichnet,**
**dass** die gespreizte oder ausgeklappte Form (100) des Bauteils im Spritzgussverfahren hergestellt wird.

7. Verfahren nach einem der vorhergehenden Ansprüche,
**dadurch gekennzeichnet,**
**dass** das Bauteil aus nur einem Material und/oder mit einer einzigen Schicht ausgeformt wird.

8. Verfahren nach einem der vorhergehenden Ansprüche,
**dadurch gekennzeichnet,**
**dass** das Bauteil nach der Herstellung in gespreizter oder ausgeklappter Form oder Stellung (100) verpackt und transportiert wird und dass das Krümmen oder Einklappen des Bauteils in die gekrümmte oder eingeklappte Form (110) erst vor einem Einbau durchgeführt wird.

9. Bauteil, insbesondere gekrümmtes oder teilweise gekrümmtes Bauteil, speziell eine Radhausschale von Kraftfahrzeugen, wobei das Bauteil eine Biegestelle (10) aufweist und in einem Bereich der Biegestelle (20) eine Materialstärke (22) des Bauteils im Vergleich zu einer Materialstärke eines angrenzenden Bereichs (22b) geringer ist,
**dadurch gekennzeichnet,**
**dass** die minimale Materialstärke (22a) im Bereich der Biegestelle (20) eine um 40% bis 60%, bevorzugter Weise um 45% bis 55%, insbesondere um etwa 50%, geringere Materialstärke (22) aufweist, als die Materialstärke des angrenzenden Bereichs (22b), wobei die Breite des Bereichs der Biegestelle (20) über die doppelte bis dreißigfache, bevorzugt die fünffache bis zwanzigfache, besonders bevorzugt die zehnfache bis zwölffache, Dicke der Materialstärke des angrenzenden Bereichs (22b) ausgeformt ist, wobei in dem Bereich der Biegestelle (20) ein Bereich konstanter Materialstärke ausgeformt ist, und wobei der Bereich konstanter Materialstärke mit minimaler Materialstärke (22a) ausgeformt ist.

10. Bauteil nach Anspruch 9,
**dadurch gekennzeichnet,**
**dass** das Bauteil einen Bereich konstanter Materialstärke aufweist, welcher bevorzugt eine minimale Materialstärke (22a) aufweist und / oder dass das Bauteil in gekrümmter oder eingeklappter Form (110) in mindestens einer Richtung, bevorzugt in der der Biegestelle (10) gegenüberliegenden Richtung, eine Öffnung aufweist.

11. Bauteil nach Anspruch 9 bis 10,
**dadurch gekennzeichnet,**
**dass** das Bauteil in gekrümmter oder eingeklappter Form (110) einen Hinterschnitt (13), bevorzugt von mindestens 7°, aufweist.

## Claims

1. Method for manufacturing components, in particular curved or partially curved components, in particular wheel housing liners for motor vehicles, in which the component is manufactured in a spread-out or unfolded form (100) and at a later point in time is formed into a curved or folded form (110), wherein the component has a bending point (10) and, in a region of the bending point (20), a material thickness (22) of the component is reduced or made thinner compared to a material thickness of an adjacent region (22b),
**characterized in that**
the minimum material thickness (22a) in the region of the bending point (20) is molded to be 40% to 60%, preferably 45% to 55%, and in particular approximately 50%, thinner than the material thickness of the adjacent region (22b), wherein the width of the region of the bending point (20) is molded to be between twice and thirty times, preferably between five and twenty times, and most preferably between ten and twelve times, of the thickness of the material in the adjacent region (22b), wherein a region of constant material thickness is molded in the region of the bending point (20), and wherein the region of constant material thickness is molded with a minimum material thickness (22a).

2. Method according to claim 1,
**characterized in that**
the component is molded in an open state in at least one direction when curved or folded into the curved or folded form (110).

3. Method according to claim 2,
**characterized in that**
the component remains open in the direction opposite the bending point (10) when curved or folded into the curved or folded form (110).

4. Method according to claim 2 or 3,
**characterized in that**
when the component is curved or folded into the curved or folded form (110), an opening width (11) is formed that is shorter than a maximum inner width (12) of the component parallel to the opening.

5. Method according to claim 4,
**characterized in that**
when the component is curved or folded into the curved or folded form (110), the component now has an undercut (13) of at least 7°.

6. Method according to one of the preceding claims,
**characterized in**
**that** the spread or unfolded shape (100) of the component is produced by injection molding.

7. Method according to one of the preceding claims,
**characterized in that** the component is molded from a single material and/or with a single layer.

8. Method according to one of the preceding claims,
**characterized in that**
the component is packaged and transported in a spread-out or unfolded form or position (100) after manufacture, and that the curving or folding of the component into the curved or folded form (110) is performed only prior to installation.

9. Component, in particular a curved or partially curved component, in particular a wheel housing liner of motor vehicles, wherein the component has a bending point (10) and, in a region of the bending point (20), a material thickness (22) of the component is reduced compared to a material thickness of an adjacent region (22b),
**characterized in that**,
the minimum material thickness (22a) in the region of the bending point (20) has a material thickness (22) that is 40% to 60%, preferably 45% to 55%, and in particular approximately 50%, thinner than the material thickness of the adjacent region (22b), wherein the width of the region of the bending point (20) is molded to be between twice and thirty times, preferably between five and twenty times, and most preferably between ten and twelve times, of the thickness of the material thickness of the adjacent region (22b), wherein a region of constant material thickness is molded in the region of the bending point (20), and wherein the region of constant material thickness is molded with a minimum material thickness (22a).

10. Component according to claim 9,
**characterized in that**
the component has a region of constant material thickness, which preferably has a minimum material thickness (22a), and/or that the component has an opening in a curved or folded form (110) in at least one direction, preferably in the direction opposite the bending point (10).

11. Component according to claims 9 to 10,
**characterized in that** the component, in a curved or folded form (110), has an undercut (13), preferably of at least 7°.

## Revendications

1. Procédé de fabrication de pièces, en particulier de pièces courbées ou partiellement courbées, notamment de passages de roue de véhicules automobiles, dans lequel la pièce est fabriquée sous une forme déployée ou dépliée (100) et puis, ultérieurement, est amenée à une forme courbée ou repliée (110), la pièce présentant un point de pliage (10) et, dans une zone du point de pliage (20), une épaisseur (22) du matériau de la pièce étant réduite ou plus faible par rapport à une épaisseur du matériau d'une zone adjacente (22b),
**caractérisé en ce que**
l'épaisseur minimale du matériau (22a) dans la zone du point de pliage (20) est réduite de 40 % à 60 %, de préférence de 45 % à 55 %, en particulier d'environ 50 %, de l'épaisseur du matériau de la zone adjacente (22b), la largeur de la zone de pliage (20) étant formée de manière à représenter entre le double et le trentième, de préférence entre le quintuple et le vingtième, et de manière particulièrement préférée entre le dixième et le douzième, de l'épaisseur du matériau de la zone adjacente (22b), une zone d'épaisseur constante du matériau étant formée dans la zone de pliage (20), et ladite zone d'épaisseur constante du matériau étant formée avec une épaisseur minimale du matériau (22a).

2. Procédé selon la revendication 1,
**caractérisé en ce que**
la pièce est formée à l'état ouvert dans au moins une direction lors de la courbure ou du repliement vers la forme courbée ou repliée (110).

3. Procédé selon la revendication 2,
**caractérisé en ce que**,
lors de la courbure ou du repliement pour obtenir la forme courbée ou repliée (110), la pièce reste ouverte dans la direction opposée au point de pliage (10).

4. Procédé selon la revendication 2 ou 3,
**caractérisé en ce que**,
lorsque la pièce est courbée ou repliée, la forme courbée ou repliée (110) présente une largeur d'ouverture (11), qui est inférieure à une plus grande largeur intérieure (12) de la pièce, parallèlement à l'ouverture.

5. Procédé selon la revendication 4,
**caractérisé en ce que**
lorsque la pièce est courbée ou repliée pour prendre la forme courbée ou repliée (110), la pièce présente alors une contre-dépouille (13) d'au moins 7°.

6. Procédé selon l'une des revendications précédentes,
**caractérisé en ce que**
la forme déployée ou dépliée (100) de la pièce est réalisée par moulage par injection.

7. Procédé selon l'une des revendications précédentes,
**caractérisé en ce que**
la pièce est moulé à partir d'un seul matériau et/ou avec une seule couche.

8. Procédé selon l'une des revendications précédentes,
**caractérisé en ce que**
la pièce est emballée et transportée après sa fabrication sous une forme ou dans une position déployée ou dépliée (100), et **en ce que** la courbure ou le repliement de la pièce pour lui donner la forme courbée ou repliée (110) n'est effectué qu'avant son montage.

9. Pièce, en particulier pièce courbée ou partiellement courbée, notamment un passage de roue de véhicule automobile, la pièce présentant un point de pliage (10) et, dans une zone du point de pliage (20), une épaisseur de matériau (22) de la pièce étant inférieure par rapport à une épaisseur de matériau d'une zone adjacente (22b),
**caractérisé en ce que**,
l'épaisseur minimale du matériau (22a) dans la zone du point de pliage (20) présente une épaisseur de matériau (22) inférieure de 40 % à 60 %, de préférence de 45 % à 55 %, et en particulier d'environ 50 %, que l'épaisseur de matériau de la zone adjacente (22b), la largeur de la zone du point de pliage (20) étant comprise entre le double et le trentième, de préférence entre le cinquième et le vingtième, et de manière particulièrement préférée entre le dixième et le douzième, de l'épaisseur de matériau de la zone adjacente (22b), une zone d'épaisseur constante de matériau étant formée dans la zone du point de pliage (20), et ladite zone d'épaisseur constante de matériau étant formée avec une épaisseur minimale de matériau (22a).

10. Pièce selon la revendication 9,
**caractérisé en ce que**
la pièce présente une zone d'épaisseur constante de matériau, qui présente de préférence une épaisseur minimale de matériau (22a), et / ou **en ce que** la pièce présente, sous une forme courbée ou repliée (110), une ouverture dans au moins une direction, de préférence dans la direction opposée au point de pliage (10).

11. Pièce selon les revendications 9 à 10,
**caractérisé en ce que**
la pièce, sous sa forme courbée ou repliée (110), présente une contre-dépouille (13), de préférence d'au moins 7°.
